# EUROPÄISCHE PATENTSCHRIFT

(11) **EP 0 697 640 B1**
(45) Veröffentlichungstag und Bekanntmachung des Hinweises auf die Patenterteilung: **29.12.1999**
(21) Anmeldenummer: 94112236.8
(22) Anmeldetag: 04.08.1994
(51) Int. Cl.: G05B 19/418

(54) **Datenanordnung für ein an einem Kommunikations-Netzwerk anschliessbares Gerät und Verfahren zur Erzeugung der Datenanordnung**
Data structure for a device coupable to a communication network and method for generating the data structure
Dispositif de données pour dispositif à raccorder au réseau de communication et méthode de génération de disposition de données

(43) Veröffentlichungstag der Anmeldung: 21.02.1996
(73) Patentinhaber: Landis & Gyr Technology Innovation AG, 6301 Zug (CH)
(72) Erfinder: Beeler, Heinz, CH-6030 Ebikon (CH); Brun, Gerhard, CH-6006 Luzern (CH); Mörtlseder, Alfred, CH-6300 Zug (CH)
(74) Vertreter: Müller, Hans-Jürgen, Dipl.-Ing.

(56) Entgegenhaltungen:
- EP-A- 0 522 590
- EP-A- 0 557 681
- WO-A-92/16905
- WO-A-93/24870
- 31ST IEEE CONFERENCE ON DECISION AND CONTROL, Bd.3, 16. Dezember 1992, WESTIN LA PALMA TUCSON ARIZONA Seiten 2529 - 2530 FABIAN ET AL 'object oriented structuring of real time systems'
- 23RD INTERNATIONAL SYMPOSIUM ON FAULT-TOLERANT COMPUTING, Nr.23, 22. Juni 1993, TOULOUSE FRANCE Seiten 660 - 665, XP437287 BARADEL ET AL. 'the use of object groups to implement dependability in a process control supervision system'

## Beschreibung

Die Erfindung bezieht sich auf eine Datenanordnung für ein an einem Kommunikations-netzwerk anschliessbares Gerät sowie auf ein Verfahren zur Erzeugung der Datenanordnung gemäss den Oberbegriffen der Ansprüche 1 und 9.

Der Begriff Datenanordnung bedeutet hier eine Anordnung mit mehreren Datenelementen, wobei ein Datenelement einerseits einen bestimmten Speicherplatz und andererseits einen im Speicherplatz gespeicherten konstanten oder variablen Wert umfasst.

Solche Datenanordnungen werden vorteilhaft in Leitsystemen verwendet, in denen eine Leitstelle oder Station und mehrere Geräte über ein Kommunikations-Netzwerk miteinander verbunden sind. Als Beispiel für ein Leitsystem sei eine Gebäudeautomationsanlage genannt, in der verschiedene Erfassungs-, Steuer- und Regelgeräte Daten über ein Kommunikations-Netzwerk mit einer Gebäudeleitstelle austauschen.

Zur Speicherung von Prozessgrössen verfügt ein solches Gerät allgemein über mehrere lokale Variablen, welche eine auf ihre Aufgabe abgestimmte Datenstruktur aufweisen. Im weiteren ist einer Variablen auch eine auf das Gerät bezogene Bedeutung oder Semantik zugeordnet.

Es ist bekannt (Abstract Syntax Notation One, ISO 8824; Basic Encoding Rules, ISO 8825) zum Austauschen von Prozessgrössen in einem Kommunikations-Netzwerk ein Protokoll zu verwenden, das Wert, Datentyp, physikalische Einheit und Bedeutung der Prozessgrössen umfasst. Die zweckgerichtete Verwendung dieser Normen setzt zwei über ein Kommunikations-Netzwerk verbundene Einrichtungen voraus, wobei wenigstens eine der beiden Einrichtungen eine Variable bzw. eine Speicherregion aufweist, deren absoluter Wert über das Kommunikations-Netzwerk übertragen wird (Oberbegriff des Anspruchs 1). Auf diese Weise ergibt sich ein relativ grosser Datenverkehr auf dem Kommunikations-Netzwerk. Tritt zum Beispiel in einem Gerät eine Veränderung einer Prozessgrösse ein und wird die Veränderung über das Kommunikations-Netzwerk an eine dem Gerät übergeordnete Leitstelle übermittelt, dann umfasst das übertragene Protokoll nicht nur den Wert der Prozessgrösse, sondern zusätzliche Informationen zur Zuordnung, Verwendung oder Auslegung des Wertes in der Leitstelle. Der Aufwand zur Aufbereitung, Übertragung und Interpretation des Protokolls ist gross. Eine die Prozessgrössen betreffende Änderung der Funktionalität des Gerätes erfordert in der Regel auch eine umfangreiche Änderung in der Leitstelle.

Der Erfindung liegt die Aufgabe zugrunde, eine Datenanordnung für ein an einem Kommunikations-Netzwerk anschliessbares Gerät zu schaffen, durch welche Prozessgrössen des Gerätes einfach in eine an das Kommunikations-Netzwerk angeschlossene Station so integrierbar sind, dass Bedeutung und Benutzungsmöglichkeiten der Prozessgrössen in der Station weitgehend bekannt sind und die Prozessgrössen somit durch die Station gezielt lesbar und/oder veränderbar sind, wobei aber bei einen Betrieb des Gerätes nur ein minimaler Datenverkehr zwischen dem Gerät und dem Kommunikations-Netzwerk auftreten darf.

Die genannte Aufgabe wird erfindungsgemäss durch die Merkmale der Ansprüche 1 und 9 gelöst. Vorteilhafte Ausgestaltungen ergeben sich aus den abhängigen Ansprüchen.

Nachfolgend werden Ausführungsbeispiele der Erfindung anhand der Zeichnung näher erläutert.

Es zeigen:
- Fig. 1: Ein Kommunikations-Netzwerk mit zwei am Kommunikations-Netzwerk angeschlossenen Ausführungen eines Gerätes und einer weiteren angeschlossenen Station,
- Fig. 2: ein prinzipielles Datenflussdiagramm zur Erzeugung einer Charakterisierung von Datenpunkten des Gerätes,
- Fig. 3: ein Ausführungsbeispiel mit einer vorteilhaften Datenanordnung für das Gerät und
- Fig. 4: ein weitere Darstellung der Datenanordnung.

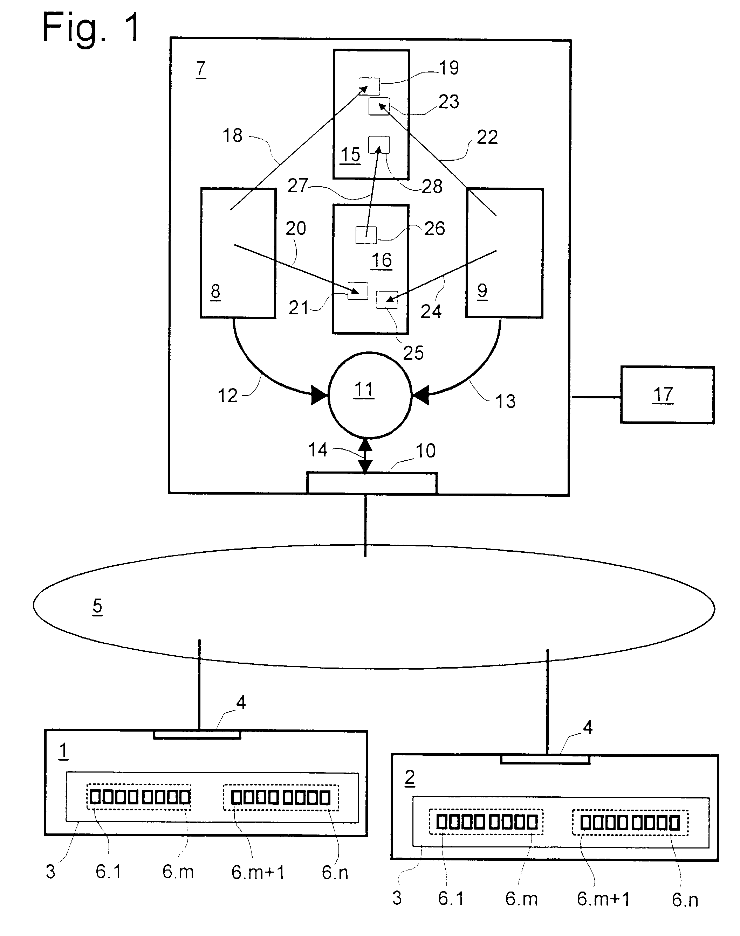

In der Fig. 1 bedeutet 1 eine erste Ausführung eines Gerätes und 2 eine zweite Ausführung des Gerätes, welches ein Speichermodul 3 und eine Schnittstelleneinheit 4 aufweist. Die beiden Ausführungen 1 und 2 sind je über die entsprechende Schnittstelleneinheit 4 mit einem Kommunikations-Netzwerk 5 verbunden.

Das Speichermodul 3 weist eine erste Anzahl n Datenpunkte 6.1 bis 6.n auf, von denen eine zweite Anzahl m Datenpunkte 6.1 bis 6.m sich mit Vorteil dadurch auszeichnen, dass die Funktionalität des Gerätes 1 bzw. 2 durch die m Datenpunkte 6.1 bis 6.m konfigurierbar ist.

Eine Station 7 weist eine Charakterisierung 8 von Objekten der ersten Ausführung 1 des Gerätes und eine weitere Charakterisierung 9 von Objekten der zweiten Ausführung 2 des Gerätes auf. Im weiteren weist die Station 7 eine Schnittstelleneinheit 10 und eine Aktivität 11 auf, wobei die Aktivität 11 über einen ersten Datenkanal 12 und einen zweiten Datenkanal 13 zum Lesen der Charakterisierung 8 bzw. der Charakterisierung 9 verfügt. Die Aktivität 11 ist zudem über einen dritten Datenkanal 14 mit der Schnittstelleneinheit 10 verbunden, welche an das Kommunikations-Netzwerk 5 angeschlossen ist. Die Aktivität 11 ist ein auf einem Prozessor laufendes Programm.

Die Station 7 weist mit Vorteil einen Textkatalog 15 und einen Einheitenkatalog 16 auf.

Die Masseinheiten der in der ersten Ausführung 1 oder in der zweiten Ausführung 2 des Gerätes benutzten Prozessgrössen sind mit Vorteil im Einheitenkatalog 16 abgespeichert und über Zeiger für die Aktivität 11 zugreifbar. Zeiger sind in der Literatur auch als Pointer oder Referenz benannt. Mit Vorteil ist eine Masseinheit in einem Datenverbund des Einheitenkataloges 16 abgespeichert, wobei die Masseinheit bzw. der Datenverbund mit der Masseinheit bei Bedarf durch Zeiger mehrfach referenzierbar ist. Der Datenverbund ist beispielsweise in der Programmiersprache C als "Struktur" (struct) beschreibbar. Der Einheitenkatalog 16 weist beispielsweise je einen Datenverbund für die Sl-Einheiten Pascal, Grad Celsius, Watt, und Lux auf, wenn die Geräte Prozessgrössen eines Druckes, einer Temperatur, einer Leistung und einer Beleuchtungsstärke aufweisen. Im Datenverbund einer Masseinheit sind mit Vorteil auch Attribute abgespeichert, welche die Auflösung und das Darstellungsformat des Wertes des beschriebenen Datenpunktes festlegen, dem die Masseinheit zugeordnet ist. Mit Vorteil ist ein Name der Masseinheit im Textkatalog 15 abgespeichert und der Datenverbund der Masseinheit weist statt des Namens einen Zeiger auf den Namen auf.

Bei Bedarf verfügt die Station 7 über ein Ein-/Ausgabegerät 17 für eine Mensch-Maschine-Schnittstelle. Das Ein-/Ausgabegerät 17 ist beispielsweise ein Bildschirmterminal.

Im Textkatalog 15 sind über Zeiger für die Aktivität 11 zugreifbare Texte abgespeichert, wobei ein Text des Textkataloges 15 beispielsweise als Zeichenkette (String) und bei Bedarf in einem Datenverbund abgespeichert ist. Der Datenverbund weist mit Vorteil mehrere Schreibweisen oder Abkürzungsformen des Textes auf. Wenn eine erste Schreibweise eines Textes beispielsweise "Sonntag" ist, dann wäre "So" eine zweite Schreibweise des Textes. Der Text bzw. der Datenverbund mit dem Text ist durch Zeiger mehrfach referenzierbar. Mit Vorteil weist der Textkatalog die Texte einer Mensch-Maschine-Schnittstelle zwischen einem Benutzer und der Station 7 bzw. der ersten Ausführung 1 bzw. der zweiten Ausführung 2 des Gerätes auf. Für die Mensch-Maschine-Schnittstelle ist die geeignete Schreibweise des Textes vorteilhafterweise aus dem Datenverbund wählbar.

Dadurch, dass die Texte der Mensch-Maschine-Schnittstelle im Textkatalog 15 als Einheit zusammengenommen abgelegt sind, ist der Textkatalog 15 die einzige sprachabhängige Komponente des Gerätes 1 bzw. 2 und der Station 7; eine Auslegung der Station 7 für verschiedene Bedienersprachen ist damit auf einfache Art durch Auswechseln des Textkataloges 15 erreichbar, wobei die Station 7 in einer weiteren Ausführungsform auch gleichzeitig mehrere Übersetzungen des Textkataloges 15 aufweisen kann.

Zugunsten einer besseren Übersicht sind in der Fig. 1 nicht alle in der Station 7 vorhandenen Zeiger auf Texte bzw. Masseinheiten dargestellt. Die Charakterisierung 8 weist in einer beispielhaften Darstellung einen ersten Zeiger 18 auf einen ersten Text 19 des Textkataloges 15 und einen zweiten Zeiger 20 auf eine erste Masseinheit 21 des Einheitenkataloges 16 auf. Die weitere Charakterisierung 9 verfügt in der Darstellung über einen dritten Zeiger 22 auf einen zweiten Text 23 des Textkataloges 15 und über einen vierten Zeiger 24 auf eine zweite Masseinheit 25 des Einheitenkataloges 16. Weiter verfügt in der Darstellung eine dritte Masseinheit 26 bzw. der Datenverbund der dritten Masseinheit 26 über einen fünften Zeiger 27 auf einen dritten Text 28 des Textkataloges 15. In einer vorteilhaften Ausführung der Charakterisierung 8 bzw. 9 ist der Zeiger 18 bzw. 20 bzw. 22 bzw. 24 eine Speicheradresse.

Eine vorteilhafte Datenanordnung für das am Kommunikations-Netzwerk 5 anschliessbare Gerät 1 bzw. 2 umfasst die im Gerät 1 bzw. 2 angeordneten Datenpunkte 6.1 bis 6.n und auch die Charakterisierung 8 bzw. 9 des Gerätes 1 bzw. 2. In einem Datenpunkt 6.k - mit dem Index k von 1 bis n - ist dynamische Prozessinformation speicherbar. Unter dynamischer Prozessinformation wird hier eine Prozessgrösse verstanden, die im Betrieb des Gerätes 1 bzw. 2 veränderbar ist. Die dynamische Prozessinformation ist beispielsweise ein Druck einer Flüssigkeit, eine gemessene Temperatur, ein Betriebszustand des Gerätes 1 bzw. 2, eine Stellgrösse, eine laufende Zeit oder ein Parameter zur Konfigurierung des Gerätes 1 und 2. Der Datenpunkt 6.k wird in der Literatur auch als Variable bezeichnet. Bei angeschlossenem Gerät 1 bzw. 2 sind die Datenpunkte 6.1 bis 6.n über das Kommunikations-Netzwerk 5 für die am Kommunikations-Netzwerk 5 angeschlossene Station 7 zum Lesen und/oder Verändern zugreifbar, wobei mit Vorteil auch ein einzelner Datenpunkt 6.k von der Station 7 aus lesbar und/oder veränderbar ist.

Die Charakterisierung 8 oder 9 ist eine statische Beschreibung von Objekten des Gerätes 1 bzw. 2, wobei statisch hier bedeutet, dass die Charakterisierung 8 bzw. 9 im Betrieb des Gerätes 1 bzw. 2 nicht veränderbar, also konstant ist. Die Charakterisierung 8 oder 9 ist eine logisch zusammengehörige Einheit, welche statische Beschreibungsdaten der Objekte des Gerätes 1 bzw. 2 umfasst, wobei die Charakterisierung 8 oder 9 in einem Speichermedium, beispielsweise in einem PROM (programmable read only memory) oder auf einer magnetischen oder optischen Speicherplatte, abgespeichert und von einem Prozessor interpretierbar ist.

Ein Objekt des Gerätes 1 bzw. 2 ist ein einzelner über das Kommunikations-Netzwerk 5 zugreifbarer Datenpunkt 6.k des Gerätes 1 bzw. 2. Im weiteren sind in der Charakterisierung 8 oder 9 mehrere der über das Kommunikations-Netzwerk 5 zugreifbaren Datenpunkte des Gerätes 1 bzw. 2 zu einem weiteren Objekt des Gerätes 1 bzw. 2 gruppierbar. Das weitere Objekt bildet also eine logisch zusammengehörige Einheit bzw. eine Struktur aus mehreren Datenpunkten 6.i bis 6.j, wobei ein Datenpunkt 6.k allgemein mehreren verschiedenen Objekten des Gerätes 1 bzw. 2 zugeordnet sein kann.

Ein vorteilhaftes Verfahren zur Ausbildung der Datenanordnung mit den Datenpunkten 6.1 bis 6.n des Gerätes 1 weist prinzipiell folgende fünf Schritte auf:

Einen ersten Schritt, in welchem jeder der n Datenpunkte 6.1 bis 6.n einem vordefinierten Datenpunkttyp zugeordnet wird, wonach ein Datenpunkt 6.k ein Objekt des Gerätes 1 und auch der zu erzeugenden Charakterisierung 8 ist.

Bei Bedarf einen zweiten Schritt, in welchem mehrere Objekte zu einem weiteren Objekt des Gerätes 1 bzw. der zu erzeugenden Charakterisierung 8 gruppiert werden.

Einen dritten Schritt, in welchem ein Objekt der zu erzeugenden Charakterisierung 8 einer vordefinierten Klasse zugeordnet wird.

Einen vierten Schritt, in welchem zur Generierung der Charakterisierung 8 für die Objekte der zu erzeugenden Charakterisierung 8 je eine Instanz der einem Objekt entsprechenden Klasse gebildet wird.

Einen fünften Schritt, in welchem die Charakterisierung 8 verteilt wird.

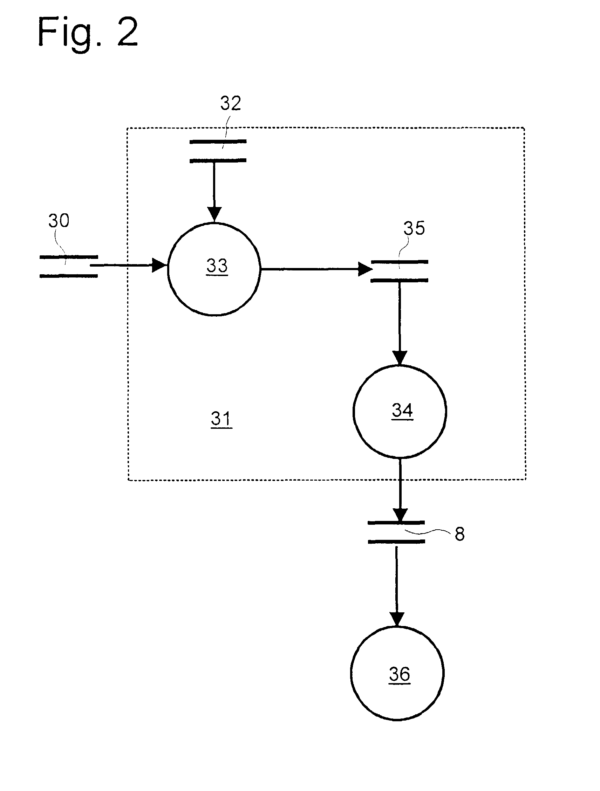

In der Fig. 2 bedeutet 30 eine Quellendatei der Charakterisierung 8 und 31 ein Compilersystem, durch welches aus der Quellendatei 30 in vorteilhafter Art die Charakterisierung 8 generierbar ist. Das Compilersystem 31 weist eine Klassenbibliothek 32 auf und umfasst weiter eine erste Aktivität 33 und eine zweite Aktivität 34. Die erste Aktivität 33 ist die Ausführung eines Comiler-Linker-Programms, welches die Quellendatei 30 liest und mit Hilfe der Klassenbibliothek 32 ein lauffähiges Zwischenprogramm 35 erzeugt. Die zweite Aktivität 34 ist die Ausführung des Zwischenprogramms 35, welche die für ein Anwendungsprogramm 36 verfügbare Charakterisierung 8 generiert. Die Charakterisierung 8 ist in bekannter Art physikalisch verteilbar, beispielsweise auf einem PROM, oder einer Diskette oder durch eine Übertragung über ein Datennetzwerk. Im Ausführungsbeispiel der Fig. 1 ist das Anwendungsprogramm 36 die Aktivität 11 der Station 7.

Das Compiler-Linker-Programm ist mit Vorteil ein käufliches System, wobei die gewählte Programmiersprache vorteilhafterweise eine auf Objekten basierende Programmierung (object oriented programming, OOP) unterstützt. Die Programmiersprache ist beispielsweise C++ (Bjarne Stroustrup: C++, Addison-Wesley).

Die in der verwendeten Programmiersprache geschriebene Klassenbibliothek 32 weist die für die Objekte der Charakterisierung 8 oder 9 verfügbaren Klassen auf.

Ein Datenpunkt 6.k (Fig. 1), mit k von 1 bis n, hat einen bestimmten Datenpunkttyp, der aus einer vorbestimmten Menge von Datenpunkttypen auswählbar ist. Die Menge der verfügbaren Datenpunkttypen weist mit Vorteil mindestens folgende Datenpunkttypen auf: einen Typ "Analogwert", einen Typ "Binärwert", einen Typ "Statuswert", einen Typ "Bitmenge", einen Typ "Zeitpunkt", einen Typ "Zeitdifferenz" und einen Typ "Block".

Mit Ausnahme des Datenpunkttyps "Block" ist der Datenpunkttyp mit Vorteil ein strukturierter Datentyp der ein erstes Feld und ein zweites Feld aufweist. Das zweite Feld weist den eigentlichen Wert der Prozessinformation des Datenpunktes 6.k auf. Das zweite Feld des Datenpunkttyps "Analogwert" ist beispielsweise in der Programmiersprache C++ als "float" bezeichnet, während beispielsweise in der Programmiersprache Pascal das zweite Feld des Datenpunkttyps "Binärwert" als "Boolean", das zweite Feld des Datenpunkttyps "Statuswert" als "Symboltyp",das zweite Feld des Datenpunkttyps "Bitmenge" als "Set" und das zweite Feld der Datenpunkttypen "Zeitpunkt" und "Zeitdifferenz" als "Record" bezeichnet werden. Werden eine Operation "Lesen" des Datenpunktes 6.k" und eine Operation "Schreiben" auf den Datenpunkt 6.k auf die Station 7 bzw. das Kommunikations-Netzwerk 5 bezogen, dann weist das erste Feld beim "Lesen" des Datenpunktes 6.k einen Zustand des Datenpunktes 6.k und beim "Schreiben" auf den Datenpunkt 6.k einen Befehl auf. Das Feld mit dem Zustand ermöglicht die Angabe eines bestimmten auf den Datenpunkt 6.k oder das Gerät 1 bzw. 2 bezogenen Fehlerzustandes, während der Zustand des Datenpunktes 6.k durch das Feld mit dem Befehl veränderbar ist.

Der Datenpunkttyp "Block" umfasst eine vorbestimmte Anzahl Bytes Speicherplatz und dient einer Darstellung von Daten in einem frei wählbaren Datenformat, welches hier als eine weiter nicht strukturierte Byte-Kette benutzbar ist. Der Datenpunkttyp "Block" beansprucht gegenüber den anderen wählbaren Datenpunkttypen eher viel Speicherplatz, beispielsweise 20 Byte.

Dadurch, dass die wählbare Menge der Datenpunkttypen beschränkt ist, wird eine unübersichtliche Typenvielfalt bei den Datenpunkten 6.1 bis 6.n verhindert, wobei der Datenpunkttyp "Block" ein im wesentlichen freies Datenformat für einen Datenpunkt 6.1 ermöglicht.

Die Darstellung und vor allem auch die Adressordnung der Datenpunkte 6.1 bis 6.n sind mit Vorteil auf die Anforderungen des Kommunikations-Netzwerkes 5 - beispielsweise auf den PROFI-Bus (Process Field Bus, DIN 19 245) - ausgelegt.

Die Klassenbibliothek 32 (Fig. 2) weist für die auswählbaren Datenpunkttypen je eine Klasse auf, durch welche der dem Datenpunkttyp zugeordnete Datenpunkt 6.k beschreibbar ist. Die Klassenbibliothek weist also mit Vorteil eine Klasse "Analogwerteklasse" für den Datenpunkttyp "Analogwert", eine Klasse "Binärwerteklasse" für den Datenpunkttyp "Binärwert", eine Klasse "Statuswerteklasse" für den Datenpunkttyp "Statuswert", eine Klasse "Bitmengenklasse" für den Datenpunkttyp "Bitmenge", eine Klasse "Zeitpunkteklasse" für den Datenpunkttyp "Zeitpunkt", eine Klasse "Zeitdifferenzenklasse" für den Datenpunkttyp "Zeitdifferenz" und eine Klasse "Blockklasse" für den Datenpunkttyp "Block" auf.

Mit Ausnahme der Klasse "Blockklasse" weist eine Klasse mit Vorteil mindestens folgende vier Attribute auf:
- Ein erstes Attribut "Adresse", durch welches eine Adresse des Datenpunktes 6.k festgelegt ist.
- Ein zweites Attribut "Name", durch welches eine Bezeichnung des Datenpunktes 6.k festgelegt ist.
- Ein drittes Attribut "Untere Grenze" und eine viertes Attribut "Obere Grenze", durch die der zwischen dem dritten Attribut und dem vierten Attribut liegende Wertebereich des Datenpunktes 6.k festgelegt ist.
- Ein fünftes Attribut "Default", durch welches ein Standardwert oder ein Startwert des Datenpunktes 6.k festgelegt ist.
- Ein sechstes Attribut "Masken", durch welches der Datenpunkt 6.k einer Gruppe zugeordnet wird, wobei die Gruppe aus einer vorbestimmten Menge von Gruppen auswählbar ist und der Datenpunkt 6.k bei Bedarf mehreren Gruppen zugeordnet werden kann. Durch das sechste Attribut werden Datenpunkte, welche logisch oder für eine bestimmte Funktion eine Einheit bilden, zu einer Gruppe zusammengefasst. Vorteilhafterweise umfasst die Menge der Gruppen eine erste Gruppe "S" mit Sollwerten des Gerätes 1, eine zweite Gruppe "V" mit Mess- oder Steuergrössen des Gerätes 1 und eine dritte Gruppe "D" mit Datenpunkten, welche für eine Diagnose am Gerät 1 wichtig sind. Durch das Attribut "Masken" sind die Datenpunkte 6.1 bis 6.n für verschiedene vorbestimmte Bediensichten auf vorteilhafte Art gruppierbar.

Bei Bedarf weist die Klasse weiter auf:
- Ein siebtes Attribut "Unit", durch welches eine Masseinheit des Datenpunktes festgelegt ist.
- Ein achtes Attribut "Zugriffsrecht", durch welches Zugriffsrechte des Anwendungsprogrammes 36 auf den Datenpunkt 6.k festgelegt sind. Die Zugriffsrechte erlauben je nach Art des Anwendungsprogrammes 36 eine mehrfach abgestufte Rechte zum Lesen und/oder Verändern bzw. Überschreiben eines Wertes, die Rechte beispielsweise zwischen "normal", "niedrig privilegiert" und "hoch privilegiert" wählbar.
- Ein neuntes Attribut "Features", durch welches besondere Fähigkeiten bzw. Eigenschaften des Datenpunktes 6.k festgelegt sind. Eine erste besondere Fähigkeiten ist die Möglichkeit, eine Wertänderung als Ereignis (Event) an ein übergeordnetes System weiterzugeben und eine zweite besondere Fähigkeit ist die Möglichkeit, einen Alarm an ein übergeordnetes System weiterzugeben.
- Ein zehntes Attribut "Konfigurierend", welches festlegt, ob der Datenpunkt 6.k zur Konfigurierung der Funktion des Gerätes 1 einsetzbar ist oder nicht.

Die Klasse "Blockklasse" weist mit Vorteil das erste Attribut "Adresse", das zweite Attribut "Name und das zehnte Attribut "Konfigurierend" auf.

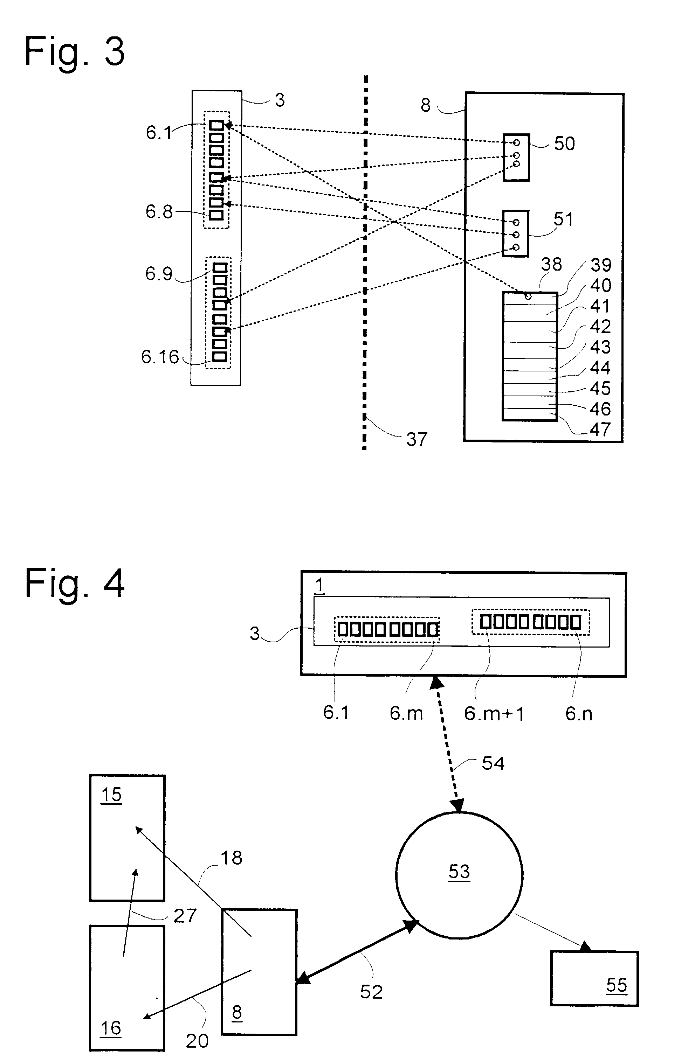

Die in der Fig. 3 dargestellte vorteilhafte Datenanordnung der ersten Ausführung 1 des Gerätes weist die Datenpunkte 6.1 bis 6.16 und die Charakterisierung 8 auf, wobei die Charakterisierung 8 von den Datenpunkten 6.1 bis 6.16 getrennt ist, was durch eine Trennlinie 37 symbolisch dargestellt ist. Die Charakterisierung 8 weist einen ersten Datensatz 38 mit Beschreibungsdaten des ersten Datenpunktes 6.1 auf.

Im Ausführungsbeispiel hat der erste Datenpunkt 6.1 den Datenpunkttyp "Analogwert". Mit Vorteil ist der erste Datensatz 38 durch eine Instanz der Klasse "Analogwerteklasse" verwirklicht. Der erste Datensatz 38 umfasst:
- erste Beschreibungsdaten 39, welche eine Adresse des Datenpunktes 6.1 festlegen und damit auch den Datenpunkt 6.1 referenzieren;
- zweite Beschreibungsdaten 40, durch welche der Datentyp des Datenpunktes 6.1 festgelegt ist,
- dritte Beschreibungsdaten 41, durch welche ein Bezeichner des Datenpunktes 6.1 festgelegt ist;
- vierte Beschreibungsdaten 42, durch welche der Wertebereich des Datenpunktes 6.1 festgelegt ist;
- fünfte Beschreibungsdaten 43, durch welche ein Standardwert des Datenpunktes 6.1 festgelegt ist;
- sechste Beschreibungsdaten 44, durch welche Zugriffsrechte zum Datenpunkt 6.1 festgelegt sind;
- siebte Beschreibungsdaten 45, welche angeben, dass der Datenpunkt 6.1 fähig ist, eine erfolgte Wertänderung an die übergeordnete Station 7 (Fig. 1) weiterzuleiten;
- achte Beschreibungsdaten 46, welche angeben, dass der Datenpunkt 6.1 zur Konfigurierung der Funktionalität des Gerätes 1 notwendig ist und
- neunte Beschreibungsdaten 47, durch welche die Masseinheit des Datenpunktes 6.1 festgelegt ist.

Dadurch, dass die Charakterisierung 8 die fünften Beschreibungsdaten 43 und die achten Beschreibungsdaten 46 aufweist, ist die Funktionalität des Gerätes 1 in vorteilhafter Art konfigurierbar. Die Funktionalität des Gerätes 1 ist durch die Standartwerte der zur Konfigurierung vorbestimmten bzw. notwendigen Datenpunkte 6.1 bis 6.m (Fig. 1) gegeben, wodurch die Funktionalität des Gerätes 1 konfigurierbar ist, indem die entsprechenden Standardwerte der Charakterisierung 8 durch das Anwendungsprogramm 36 in die Datenpunkte 6.1 bis 6.m abgespeichert werden.

Die zweiten Beschreibungsdaten 40 sind dadurch erzeugbar, dass der Datenpunkt 6.1 in der Quellendatei 30 der Klasse "Analogwerteklasse" zugeordnet wird. Die weiteren Beschreibungsdaten 39 und 41 bis 47 resultieren durch die in der Quellendatei 30 für die Instanz in der "Analogwerteklasse" eingesetzten aktuellen Attributwerte, wobei beispielhaft:
- die ersten Beschreibungsdaten 39 durch den aktuellen Attributwert "151" des ersten Attributes "Adresse" festgelegt sind,
- die dritten Beschreibungsdaten 41 durch den aktuellen Attributwert "Lufttemperatur" des zweiten Attributes "Name" festgelegt sind,
- die vierten Beschreibungsdaten 42 durch den aktuellen Attributwert "10.50" des dritten Attributes "Untere Grenze" und den aktuellen Attributwert "27.50" des vierten Attributes "Obere Grenze" festgelegt sind,
- die fünften Beschreibungsdaten 43 durch den aktuellen Attributwert "21.0" des fünften Attributes "Default" festgelegt sind,
- die sechsten Beschreibungsdaten 44 durch den aktuellen Attributwert "normal" des achten Attributes "Zugriffsrecht" festgelegt sind,
- die siebten Beschreibungsdaten 45 durch den aktuellen Attributwert "Event" des neunten Attributes "Features" festgelegt sind,
- die achten Beschreibungsdaten 46 durch den aktuellen Attributwert "true" des zehnten Attributes "Konfigurierend" festgelegt sind und
- die neunten Beschreibungsdaten 47 durch den aktuellen Attributwert "°C " des siebten Attributes "Unit" festgelegt sind.

Die Charakterisierung 8 weist weiter je einen in der Fig. 3 nicht dargestellten Datensatz für die Datenpunkte 6.2 bis 6.16 auf, welche, in der Art wie im Ausführungsbeispiel für den Datenpunkt 6.1 dargestellt, aufgebaut und erzeugt sind.

Die Charakterisierung 8 weist zudem auch erste Gruppierungsdaten 50 und zweite Gruppierungsdaten 51 auf. Die ersten Gruppierungsdaten 50 gruppieren den ersten Datenpunkt 6.1, den fünften Datenpunkt 6.5 und den zwölften Datenpunkt 6.12 des Gerätes 1 (Fig. 1) zu einer logisch zusammengehörigen Einheit. In vorteilhafter Art sind die ersten Gruppierungsdaten 50 durch das Compilersystem 31 erzeugbar, wenn in der Klasse für den ersten Datenpunkt 6.1 und in der Klasse für den fünften Datenpunkt 6.5 und in der Klasse für den zwölften Datenpunkt 6.12 jeweils für das sechste Attribut "Masken" der aktuelle Attributwert einer gemeinsamen Gruppe - beispielsweise der Gruppe "S" - gesetzt ist.

Die zweiten Gruppierungsdaten 51 gruppieren den fünften Datenpunkt 6.5, den siebten Datenpunkt 6.7 und den vierzehnten Datenpunkt 6.14 des Gerätes 1 (Fig. 1) zu einer weiteren logisch zusammengehörigen Einheit.

In vorteilhafter Art sind die zweiten Gruppierungsdaten 51 durch das Compilersystem 31 erzeugbar, wenn in den beteiligten Klassen, wie bei den ersten Gruppierungsdaten 50 beschrieben, jeweils für das sechste Attribut "Masken" der aktuelle Attributwert einer gemeinsamen Gruppe - beispielsweise der Gruppe "D" - gesetzt ist.

In einer vorteilhaften Ausführungsvariante der Charakterisierung 8 sind die zweiten Gruppierungsdaten 51 durch das Compilersystem 31 erzeugbar, wenn in der Quellendatei 30 ein zweiter Datensatz mit mindestens einem Teil der Beschreibungsdaten 39 bis 47 des fünften Datenpunktes 6.5 und ein dritter Datensatz mit mindestens einem Teil der Beschreibungsdaten 39 bis 47 des siebten Datenpunktes 6.7 und ein vierter Datensatz mit mindestens einem Teil der Beschreibungsdaten 39 bis 47 des vierzehnten Datenpunktes 6.14 mit Durchschnittsoperatoren verknüpft sind, wodurch der fünfte Datenpunktes 6.5 mit dem siebten Datenpunkt 6.7 und dem vierzehnten Datenpunkt 6.14 ein weiteres Objekt des Gerätes bilden.

Die Gruppierungsdaten 50 bzw. 51 stellen je eine vordefinierte Bediensicht für das Anwendungsprogramm 36 dar, welches durch die Charakterisierung 8 mit den verfügbaren Gruppierungsdaten 50 bzw. 51 mit Vorteil im wesentlichen datengesteuert verwirklicht ist.

In der Fig. 4 ist die Charakterisierung 8 über einen ersten dem Datenaustausch dienenden Kommunikationskanal 52 mit einem Programmsystem 53 verbunden. In einer ersten Variante des Programmsystems 53 fehlt ein zweiter Kommunikationskanal 54; das Programmsystem 53 ist in der ersten Variante also nicht mit dem Gerät 1 verbunden. Durch die erste Variante des Programmsystems 53 wird die Charakterisierung 8 zur Generierung einer von der Charakterisierung 8 abhängigen Datenbank 55 benutzt, wodurch beispielsweise ein Leitsystem weitgehend betriebsfertig ausgelegt werden kann, ohne dass das zum Leitsystem gehörende Gerät 1 angeschlossen ist.

Eine zweite Variante des Programmsystems 53 ist über den zweiten Kommunikationskanal 54 mit dem Gerät 1 verbunden. Die zweite Variante des Programmsystems 53 ist ein Diagnose-Programm, welches zur Fehlersuche oder für Optimierungsaufgaben ausgelegt ist. Über den zweiten Kommunikationskanal 54 sind Prozessdaten des Gerät 1 für das Diagnose-Programm lesbar und/veränderbar. Durch die verfügbare Charakterisierung 8 ist das Diagnose-Programm weitgehend datengesteuert und damit einfach und sicher aufgebaut.

Die Datenanordnung, welche einerseits die Datenpunkte 6.1 bis 6.n und andrerseits die Charakterisierung 8 der Datenpunkte 6.1 bis 6.n umfasst, ist ein vorteilhaftes Mittel zur Speicherung von Prozessgrössen des am Kommunikations-Netzwerk 5 angeschlossenen Gerätes 1, wobei die Prozessgrössen in der am Kommunikations-Netzwerk angeschlossene Station 7 dank der Charakterisierung 8 für die Aktivität 11 in vorteilhafter Art benutzbar sind.

Die vorteilhafte Datenanordnung ermöglicht das Abspeichern der Charakterisierung 8 bzw. 9 in der Station 7 und schafft damit die Voraussetzung, dass im Betrieb des Gerätes 1 bzw. 2, ein Zugriff auf das Gerät 1 bzw. 2, zum Lesen oder Verändern der Prozessinformation eines Datenpunktes 6.k, mit einem Minimum an Datenverkehr auf dem Datennetzwerk 5 durchführbar ist. Besonders vorteilhaft wirkt sich dabei aus, dass auch ein einzelner Datenpunkt 6.k von der Station 7 aus zugreifbar ist und dass weiter, mit den Gruppierungsdaten 50 bzw. 51, die Datenpunkte 6.1 bis 6.n aus der Sicht der Aktivität 11 bzw. des Anwenungsprogrammes 36 bzw. des Programmsystems 53 nach verschiedenen Gesichtspunkten strukturierbar sind.

Dadurch, dass zur Erzeugung der Charakterisierung 8 bzw. 9 eine vordefinierte Klassenbibliothek 32 bereitgestellt und benutzt wird, durch welche mögliche Freiheitsgrade bei der Erzeugung eingeschränkt werden, ist eine wesentliche Steigerung der Qualität des Gerätes 1 bzw. 2 erreichbar, wobei zudem - dank Datensteuerung durch die Charakterisierung 8 bzw. 9 - der Aufwand zur sicheren Programmierung der Aktivität 11 bzw. des Anwendungsprogrammes 36 bzw. des Programmiersystems 53 stark reduziert wird. Der durch die Charakterisierung 8 bzw. 9 beanspruchte Speicherplatz muss nicht im Gerät 1 bzw. 2 verfügbar sein.

## Patentansprüche

1. Datenanordnung für ein an einem Kommunikations-Netzwerk (5) anschließbares Gerät (1, 2), mit im Gerät (1, 2) angeordneten Datenpunkten (6.1 ... 6n) zum Speichern dynamischer Prozeßinformationen, wobei bei angeschlossenem Gerät (1, 2) die Datenpunkte (6.1 ... 6.n) über das Kommunikations-Netzwerk (5) für eine bestimmte am Kommunikations-Netzwerk (5) angeschlossene Station (7) zum Lesen und/oder Verändern zugreifbar sind,
**dadurch gekennzeichnet,**
daß ein über das Kommunikations-Netzwerk (5) zugreifbarer Datenpunkt (6k) des Gerätes (1, 2) ein Objekt des Gerätes ist,
daß die Datenanordnung eine von einem Prozessor interpretierbare statische Charakterisierung (8, 9) von Objekten des Gerätes (1, 2) aufweist, welche eine logische zusammengehörige Einheit bildet und für einen in der Station (7) angeordneten Prozessor (11) zum Lesen zugreifbar ist, und
daß die statischen Beschreibungsdaten der Objekte des Gerätes (1; 2) umfassende Charakterisierung (8, 9) in Speichereinheiten außerhalb des Gerätes (1; 2) abgespeichert ist.

2. Datenanordnung nach Anspruch 1, dadurch gekennzeichnet, dass eine Gruppe von über das Kommunikations-Netzwerk (5) zugreifbaren Datenpunkten (6.i .. 6.j) des Gerätes (1; 2) durch die Charakterisierung (8; 9) zu einem weiteren Objekt (51) des Gerätes (1; 2) gruppiert sind.

3. Datenanordnung nach einem der Anspruche 1 oder 2, dadurch gekennzeichnet, dass die Charakterisierung (8; 9) für ein Objekt umfasst
- erste Beschreibungsdaten (39), welche eine Adresse des Objektes festlegen,
- zweite Beschreibungsdaten (40), durch welche der Datentyp des Objektes bestimmt ist,
- dritte Beschreibungsdaten (41), durch welche eine Bezeichnung des Objektes festgelegt ist,
- vierte Beschreibungsdaten (42), durch welche ein Wertebereich des Objektes bestimmt ist, und
- fünfte Beschreibungsdaten (43), durch welche ein Standardwert des Objektes bestimmt ist.

4. Datenanordnung nach Anspruch 3, dadurch gekennzeichnet,
dass die Charakterisierung (8; 9) für das Objekt auch sechste Beschreibungsdaten (44) umfasst, durch welche wählbare Zugriffsrechte auf das Objekt festgelegt sind.

5. Datenanordnung einem der Ansprüche 3 oder 4, dadurch gekennzeichnet,
dass die Charakterisierung (8; 9) für ein Objekt auch siebte Beschreibungsdaten (45) umfasst, durch welche vom Gerät unterstützte Operationen auf das Objekt festgelegt werden.

6. Datenanordnung nach einem der Anspruch 3 bis 5, dadurch gekennzeichnet,
dass die Charakterisierung (8; 9) für ein Objekt auch achte Beschreibungsdaten (46) umfasst, welche das Objekt als zur Konfigurierung einer bestimmten Ausführungsart des Gerätes (1; 2) notwendig markiert.

7. Datenanordnung nach einem der vorangehenden Ansprüche, gekennzeichnet
durch Zeiger (20; 24) auf Elemente (21; 25) eines Einheitenkataloges (16), der physikalische Masseinheiten und Darstellungsformate von im Kommunikations-Netzwerk (5) benutzten Prozessgrössen umfasst, wobei die Elemente des Einheitenkataloges (16) zur Vereinheitlichung und Vereinfachung der Charakterisierung (8; 9) in der Charakterisierung (8; 9) mittels der Zeiger(20; 24) referenzierbar sind.

8. Datenanordnung nach einem der vorangehenden Ansprüche, gekennzeichnet
durch Zeiger (18; 22; 27) auf Texte (19; 23; 28) eines in einer bestimmten Sprache verfassten Textkataloges (15), der die Texte (19; 23; 28) für eine Mensch-Maschine-Schnittstelle zu der am Kommunikations-Netzwerk (5) angeschlossen Station (7) aufweist, wobei die Texte für sprachabhängige Teile der Charakterisierung (8; 9) des Gerätes (1; 2) mittels der Zeiger(18; 22; 27) referenzierbar sind.

9. Verfahren zur Erzeugung einer Datenanordnung nach einem der Ansprüche 1 bis 8, mit folgenden Schritten:
einem ersten Schritt, in welchem ein Datenpunkt (6.k) einem Datenpunkttyp aus einer bestimmten Menge von wählbaren Datenpunkttypen zugeordnet wird, wonach der Datenpunkt (6.k) ein Objekt der erzeugenden statischen Charakterisierung (8, 9) ist,
einem zweiten Schritt, in welchem logisch zusammengehörige Objekte der statischen Charakterisierung (8, 9)zu einem weiteren Objekt der zu erzeugenden statischen Charakterisierung (8, 9) gruppiert werden,
einem dritten Schritt, in welchem ein Objekt der zu erzeugenden statischen Charakterisierung (8, 9) einer Klasse aus einer bestimmten Menge von wählbaren Klassen zugeordnet wird,
einem vierten Schritt, in welchem für die Objekte der zu erzeugenden statischen Charakterisierung (8, 9) je eine Instanz der einem Objekt entsprechenden Klasse gebildet wird, und einem fünften Schritt, in welchem die statische
Charakterisierung (8, 9) verteilt wird.

10. Verfahren zur Erzeugung einer Datenanordnung nach Anspruch 9 mit folgenden Schritten:
einem ersten Schritt, in dem eine Quellendatei (30) der statischen Charakterisierung (8, 9) der Objekte des Gerätes (1,2) in einer objektorientierten Sprache erstellt wird, wobei eine vordefinierte Klassenbibliothek (32) mit einer bestimmten Menge von Klassen verwendet wird und die Quellendatei (30) einen Datensatz (38, 50, 51) für ein Objekt aufweist,
einem zweiten Schritt, in welchem ein Compilersystem (31) aus der Quellendatei (30) die statische Charakterisierung (8, 9) in Form einer binären Datei erzeugt.

11. Verfahren nach Anspruch 10, dadurch gekennzeichnet,
dass der zweite Schritt zwei Phasen umfasst, wobei in einer ersten Phase die Quellendatei (30) von einem Compiler (33) in ein ausführbares Programm (35) zur Generierung der Charakterisierung (8; 9) übersetzt wird, welches in einer zweiten Phase ausgeführt wird, wobei die statische Charakterisierung (8; 9) selbsttätig erzeugt wird.

## Claims

1. A data arrangement for an apparatus (1, 2) connectable to a communication network (5), having data points (6.1...6n) arranged in the apparatus (1, 2) for the storage of items of dynamic process information, wherein with the apparatus (1, 2) connected the data points (6.1...6.n) can be accessed by way of the communication network (5) for a given station (7) connected to the communication network (5), for reading and/or modifying purposes, characterised in that
a data point (6,k) of the apparatus (1, 2), which can be accessed by way of the communication network (5), is an object of the apparatus,
the data arrangement has a static characterisation (8, 9) of objects of the apparatus (1, 2), which characterisation can be interpreted by a processor and forms a logically interrelated unit and can be accessed for a processor (11) arranged in the station (7) for reading purposes, and
the characterisation (8, 9) including static description data of the objects of the apparatus (1; 2) is stored in storage units outside the apparatus (1; 2).

2. A data arrangement according to claim 1 characterised in that a group of data points (6.i...6.j) of the apparatus (1; 2), which data points can be accessed by way of the communication network (5), are grouped by the characterisation (8; 9) to form a further object (51) of the apparatus (1; 2).

3. A data arrangement according to one of claims 1 and 2 characterised in that the characterisation (8; 9) for an object includes
- first description data (39) which establish an address of the object,
- second description data (40) by which the data type of the object is determined,
- third description data (41) by which an identification of the object is established,
- fourth description data (42) by which a value range of the object is determined, and
- fifth description data (43) by which a standard value of the object is determined.

4. A data arrangement according to claim 3 characterised in that the characterisation (8; 9) for the object also includes sixth description data (44) by which selectable access rights to the object are established.

5. A data arrangement according to one of claims 3 and 4 characterised in that the characterisation (8; 9) for an object also includes seventh description data (45) by which operations on the object, which are supported by the apparatus, are established.

6. A data arrangement according to one of claims 3 to 5 characterised in that the characterisation (8; 9) for an object also includes eighth description data (46) which the object marks as necessary for configuring a given embodiment of the apparatus (1; 2).

7. A data arrangement according to one of the preceding claims characterised by pointers (20; 24) to elements (21; 25) of a unit catalogue (16) which includes physical measurement units and representation formats of process parameters which are used in the communication network (5), wherein the elements of the unit catalogue (16) can be referenced for standardisation and simplification of the characterisation (8; 9) in the characterisation (8; 9) by means of the pointers (20; 24).

8. A data arrangement according to one of the preceding claims characterised by pointers (18; 22; 27) to texts (19; 23; 28) of a text catalogue (15) which is drafted in a given language and which has the texts (19; 23; 28) for a man-machine interface to the station (7) connected to the communication network (5), wherein the texts can be referenced for speech-dependent parts of the characterisation (8; 9) of the apparatus (1; 2) by means of the pointers (18; 22; 27).

9. A method of producing a data arrangement according to one of claims 1 to 8, comprising the following steps:
a first step in which a data point (6.k) is associated with a data point type from a given quantity of selectable data point types, whereupon the data point (6,k) is an object of the static characterisation (8, 9) to be produced,
a second step in which logically interrelated objects of the static characterisation (8, 9) are grouped to form a further object of the static characterisation (8, 9) to be produced,
a third step in which an object of the static characterisation (8, 9) to be produced is associated with a class from a given quantity of selectable classes,
a fourth step in which a respective instance of the class corresponding to an object is formed for the objects of the static characterisation (8, 9) to be produced, and
a fifth step in which the static characterisation (8, 9) is distributed.

10. A method of producing a data arrangement according to claim 9, comprising the following steps:
a first step in which a source data file (30) of the static characterisation (8, 9) of the objects of the apparatus (1, 2) is prepared in an object-oriented language, wherein a predefined class library (32) with a given quantity of classes is used and the source data file (30) has a data set (38, 50, 51) for an object, and
a second step in which a compiler system (31) produces from the source data file (30) the static characterisation (8, 9) in the form of a binary data file.

11. A method according to claim 10 characterised in that the second step comprises two phases, wherein in a first phase the source data file (30) is translated by a compiler (33) into an executable program (35) for generation of the characterisation (8; 9), which program is executed in a second phase, wherein the static characterisation (8; 9) is automatically produced.

## Revendications

1. Agencement de données pour un dispositif (1 ; 2) raccordable à un réseau de communications (5), avec des points de donnés (6.1 ; ... ; 6.n) agencés dans le dispositif (1 ; 2) pour stocker des informations dynamiques de processus, où dans le dispositif (1 ; 2) raccordé les points de données (6.1, ... ; 6.n) sont accessibles par l'intermédiaire du réseau de communications (5) pour une station (7) déterminée raccordée au réseau de communications (5) pour une lecture et/ ou une modification,
caractérisé en ce que,
- un point de données (6k) du dispositif (1 ; 2) accessible par l'intermédiaire du réseau de communications (5) est un objet du dispositif (1 ; 2),
- l'agencement de données présente une caractérisation statique (8, 9) d'objets du dispositif (1 ; 2) interprétable par un processeur laquelle forme une unité logique homogène et est accessible pour une lecture à un processeur (11) arrangé dans la station (7), et
- la caractérisation formée de données descriptives statiques des objets du dispositif (1 ; 2) est stockée en dehors du dispositif (1 ; 2).

2. Agencement de données conforme à la revendication 1, caractérisé en ce que, il existe un groupe de points de données (6.i ; ... ; 6.j) du dispositif accessibles par l'intermédiaire du réseau de communications (5) qui sont groupés à un autre objet (51) du dispositif (1 ; 2) par l'intermédiaire de la caractérisation (8 ; 9).

3. Agencement de données conforme à la revendication 1 ou à la revendication 2, caractérisé en ce que, la caractérisation (8 ; 9) d'un objet comprend :
- des premières données descriptives (39), qui fixent une adresse de l'objet,
- des deuxièmes données descriptives (40), par lesquelles le genre de données de l'objet est déterminé,
- des troisièmes données descriptives (41), par lesquelles une dénomination de l'objet est fixée,
- des quatrièmes données descriptives (42), par lesquelles la plage des valeurs de l'objet est déterminée, et
- des cinquièmes données descriptives (43), par lesquelles la valeur standard de l'objet est déterminée.

4. Agencement de données conforme à la revendication 3, caractérisé en ce que,
la caractérisation (8 ; 9) de l'objet comporte en outre des sixièmes données descriptives (45), par lesquelles des droits d'accès valides à l'objet sont fixés.

5. Agencement de données conforme à la revendication 3 ou à la revendication 4, caractérisé en ce que,
la caractérisation (8 ; 9) de l'objet comporte en outre des septièmes données descriptives (44), par lesquelles des opérations d'assistance du dispositif à l'objet sont fixées.

6. Agencement de données conforme à l'une des revendications de 3 à 5, caractérisé en ce que,
la caractérisation (8 ; 9) de l'objet comporte en outre des huitièmes données descriptives (46), qui marquent l'objet comme étant utile pour configurer un mode d'exécution déterminé du dispositif (1 ; 2).

7. Agencement de données conforme à l'une quelconque des revendications précédentes, caractérisé par des flèches (20 ; 24) sur des éléments (21 ; 25) d'un catalogue d'unités (16), qui comporte des unités de mesures physiques et des formats de présentation des grandeurs de processus qu'il utilise dans le réseau de communications (5), dans lequel on peut faire référence aux éléments du catalogue d'unités (16) au moyen des flèches (20 ; 24) pour unifier et simplifier la caractérisation (8 ; 9) dans la caractérisation (8 ; 9).

8. Agencement de données conforme à l'une quelconque des revendications précédentes, caractérisé par des flèches (18 ; 22 ; 27) sur des textes (19 ; 23 ; 28) d'un catalogue de textes (15) rédigé dans une langue déterminée, qui présente les textes (19 ; 23 ; 28) comme interface homme - machine à la station (7) raccordée au réseau de communications (5), dans lequel on peut faire référence au texte au moyen des flèches (18 ; 2 ; 27) pour des parties de la caractérisation (8 ; 9) du dispositif (1 ; 2) qui dépendent de la langue.

9. Procédé pour engendrer un agencement de données conformément aux revendications 1 à 8, comprenant les étapes suivantes :
une première étape, dans laquelle un point de données (6.k) est arrangé selon un genre de point de données dans une multitude déterminée de genres de points de données que l'on peut choisir, le point de données étant alors un objet de la caractérisation statique (8 ; 9) en cours d'engendrement,
une deuxième étape, dans laquelle des objets logiques homogènes de caractérisations statiques (8 ; 9) sont groupées avec un autre objet pour lequel on doit engendrer la caractérisation statique (8 ; 9),
une troisième étape, dans laquelle un objet dont la caractérisation statique (8 ; 9) doit être engendrée est arrangé en une classe parmi une multitude déterminée de classes que l'on peut choisir,
une quatrième étape, dans laquelle, pour chacun des objets dont la caractérisation statique (8 ; 9) doit être engendrée, une instance de la classe en correspondance à l'objet est formée,
et une cinquième étape, dans laquelle la caractérisation statique (8 ; 9) est répartie.

10. Procédé pour engendrer un agencement de données conformément à la revendication 9, comprenant les étapes suivantes :
une première étape, dans laquelle un fichier source (30) de la caractérisation statique (8 ; 9) des objets du dispositif (1 ; 2) est engendré selon un langage orienté objet, où une bibliothèque de classes prédéfinies (32) ayant une multitude déterminée de classes est utilisée et le fichier source (30) présente un jeu de données (38 ; 50 ; 51) pour un objet,
une deuxième étape, dans laquelle un compilateur (31) engendre à partir du fichier source (30) la caractérisation statique (8 ; 9) sous la forme d'un fichier binaire.

11. Procédé conforme à la revendication 10, caractérisé en ce que,
la deuxième étape comporte deux phases, où, dans une première phase le fichier source (30) est traduit par un compilateur (33) en un programme exécutable (35) pour engendrer la caractérisation (8 ; 9), lequel est exécuté dans une deuxième phase, où la caractérisation statique est engendrée de manière automatique.
